# EUROPEAN PATENT SPECIFICATION

(11) **EP 1 248 178 B1**
(45) Date of publication and mention of the grant of the patent: **07.01.2004**
(21) Application number: 01108375.5
(22) Date of filing: 03.04.2001
(51) Int. Cl.: G06F 1/00

(54) **Automatic creation of roles for a role-based access control system**
Automatische Bildung der Rollen zum rollenbasierten Zugriffskontrollsystem
Création automatique des rôles pour un système de contrôle d'accès basé sur des rôles

(43) Date of publication of application: 09.10.2002
(73) Proprietor: Beta Systems Software AG, 10559 Berlin (DE)
(72) Inventor: Shohat, Dalia, 53173 Bonn (DE)
(74) Representative: Wolff, Felix, Dr.

(56) References cited:
- EP-A- 1 035 485
- US-A- 6 023 765
- ROECKLE H ET AL: "PROCESS-ORIENTED APPROACH FOR ROLE-FINDING TO IMPLEMENT ROLE-BASED SECURITY ADMINISTRATION IN A LARGE INDUSTRIAL ORGANIZATION" PROCEEDINGS OF THE 5TH. ACM WORKSHOP ON ROLE-BASED ACCESS CONTROL. BERLIN, GERMANY, JULY 26 - 27, 2000, ACM ROLE-BASED ACCESS CONTROL WORKSHOP, NEW YORK, NY: ACM, US, 26 July 2000 (2000-07-26), pages 103-110, XP000958097 ISBN: 1-58113-259-X

## Description

The present invention relates to a process for the automated creation of roles for a role-based access control system of an enterprise, whereas the system organizes and manages the access of users to sensitive information in an inter- and/or intranet, by means of at least one data base comprising at least the relevant, existing security data about users and their access to sensitive information, the data base being connected to a computer, the process comprises the following steps:
a) loading the security data from the data base into the computer
b) mining the loaded data to find similarities that will allow the creation of organizational roles and/or functional roles and
c) creation of at least one role based on the outcome of step b.

Communication networks that are open to the public; i.e. internets and modern intranets are becoming increasingly important for enterprises, in order to realize innovative business structures and to be competitive in today's business world. However, these open communication networks bare a high risk of unauthorized access to sensible business- and/or personal related data. Thus, there is an increasing demand to establish and/or increase the level of security in the above mentioned networks by means of access control based on access rights. Until today, in most enterprises the access rights of the employees and/or third parties having access to a certain networks are assigned individually. This procedure has the disadvantages that:
- the effort of security management in the networks increase dramatically,
- there is a huge number of different access rights and
- no consistent security policy can be realized.

These disadvantages can be overcome by the so called role based access control. In this access control system the access rights are not tailor-made for a certain employee, but the access right is based on a role that an employee plays within the enterprise. The role of an employee within a company is characterized by the job and/or the function he or she should perform in the organization. From an organizational point of view, these roles are independent of particular IT-systems and correspond to a predefined position or consist of one and/or more functions. Thus, the role structure can be derived from functional and organizational properties of the company.

From a security point of view, the necessity arises, that the employees obtain all required access rights on computers, networks, applications, data etc., in order to be able to perform in their jobs or functions. Rather than assigning access right directly to a person; i.e. the employee, roles are formed as an in-between layer to bundle these specific access rights. A role is therefore a container of access rights, privileges and/or attributes that once the person gets authorized for the role, allows access to the IT resources needed for the job or function. Role based access control has the advantage that only a limited number of roles exist within an enterprise which makes the security management much more efficient. Additionally a consistent security policy can be realized within the enterprise based on role based access control.

The roles and/or the role structure can be derived from the existing security data. However, this finding of the roles has often been very difficult in the past and in a lot of cases not possible, because:
- there is no visible structure in the historically grown access right data,
- there is a considerable amount of unauthorized access rights,
- the policies of the company organization and of the access rights are not consistent, and
- reliable job descriptions are not available.
- and the amount of security data is in most cases enormous.

It is therefore an object of the present invention to provide a process that allows the automated creation of roles based on the existing security data for a role-based access control system for an enterprise.

This objective is solved by a process for the automated creation of roles for a role-based access control system of an enterprise, whereas the system organizes and manages the access of users to sensitive information in an inter- and/or intranet, by means of at least one data base comprising at least the relevant, existing security data about users and their access to sensitive information, the data base being connected to a computer, the process comprises the following steps:
a) loading the security data from the data base into the computer
b) mining the loaded data to find similarities that will allow the creation of organizational roles and/or functional roles and
c) creation of at least one role based on the outcome of step b.

According to the inventive process, roles for a role-based access control system of an enterprise are created. A role based access control system according to the present invention is for example described in "Role Based Access Control", David Ferraiolo and Richard Kuhn, 15^{th} National Computer Security Conference, Baltimore Vol II, pp. 554 - 563 or in "Role-Based Access Control: A Multi-Dimensional View", Sandhu et al. Proc. Of 10^{th} Annual Computer Security Application Conf., Florida, Orlando, December 5-9 1994, pages 54-62. These articles are included as references and are thus part of the present disclosure. This role based access control system is a security system that allows enterprises, for example companies, administrative bodies, defense organizations etc. to group employees with the same or similar jobs or tasks into groups or roles, granting access rights to information technology (IT)-facilities to the roles themselves and not to each individual employee. The individual employee gets authorized for a certain role. This means that security system administrators have to maintain only limited number of roles rather than the whole user population.

A role according to the present invention is a virtual container that comprises access rights, privileges and/or attributes that, once the IT-user gets authorized for the role, allows access to the IT-resources, data and transaction authorizations needed for the job or function(s) that the IT-user performs.

The relevant existing security data must at least comprise the status quo of the existing access rights of each IT-User of the enterprise; i.e. access to computers, networks, databases hardware, software and/or transaction authorizations. Preferably, the security data additionally comprises:
- organizational data for example the position of a person in the enterprise; i.e. the company, the division and/or the location the person works and/or
- functional data for example in which projects a certain person is involved and/or job descriptions.

The process according to the present invention is started by loading at least the relevant, existing security data from the base into a computer. A computer according to the present invention comprises at least one CPU. The data base can be on any medium that allows the storage of data. Preferably, the data base is stored on a hard disk that can be preferably inserted into the computer. In another preferred embodiment of the present invention, the data base is stored in the RAM of a computer. This computer can be the same computer on which the data mining is executed. The person skilled in the art, however, understands that the computer can also be part of a network of at least two computers and that the data storage and the mining of the data takes place on at least two different computers.

According to the present invention, the loaded data is mined to find similarities that will allow the creation of organizational- and/or functional roles. Every data mining process known to those skilled in the art can be used as they are for example described in "Predictive Data Mining", Sholom M. Weiss & Nitin Indurkhya, 1988, Morgan Kaufmann Publishers, pages 6 - 13, "From data Mining to Knowledge Discovery, Usama M. Fayad, Gregory Piatetsky-Shapiro, Padrhaic Smyth, Advances in Knowledge Discovery and Data Mining, pages 6 -17 or "Information Mining with the IBM Intelligent Miner Family", An IBM Software Solutions White Paper, Daniel S. Tkach, February 1998, available under http:// www.software.ibm.com/data/ or from IBM Corporation, 208 Harbor Drive, Stamford, Connecticut 06904, USA. These articles are included as reference and considered as part of the present disclosure. The role miner examines the existing security data for similarities and groups as much as possible of the security data into as little as possible roles. In a preferred embodiment of the present invention, the loaded data is clustered to find suitable semantics for the role description and/or statistics for values of all role attributes. For this embodiment, statistical thresholds have to be provided to the inventive process so that discovered similarities can be converted into role attributes.

In another preferred embodiment of the present invention, association methods as described in the above mentioned IBM paper, page 13, "Link analysis" are employed to find similarities and group as much as possible of the security data into as little as possible roles. More preferably, the security data comprises the user-identification (user-ID) of each user and association methods are used to discover the similarities between the user-IDs and the authorization sets and/or group membership sets. The results of this analysis can be taken to create at least one role.

In another preferred embodiment of the present invention, the data is explored to find empty and/or invalid data fields. After the exploration, the data is mined.

Based on the outcome of the mining step, the computer automatically creates roles. The roles are assigned to the IT-users.

Preferably, the computer is part of a network and automatically assigns the created roles to all IT-users, which are defined within the network.

The present invention has the advantage, that roles for a role-based access control system can be created automatically, based on the existing security data. Unauthorized access rights can be discovered and a consistent policy regarding access rights to computers, networks data-bases etc. can be realized.

The created roles can be stored in the data base from which the security data has been loaded.

The present invention is now illustrated by an example according to **Figures 1-3**. These illustrations do not limit the scope of the present invention.

**Figure 1** illustrates the existing access data.

**Figure 2** illustrates created roles.

**Figure 3** illustrates the assignment of the created roles to the users.

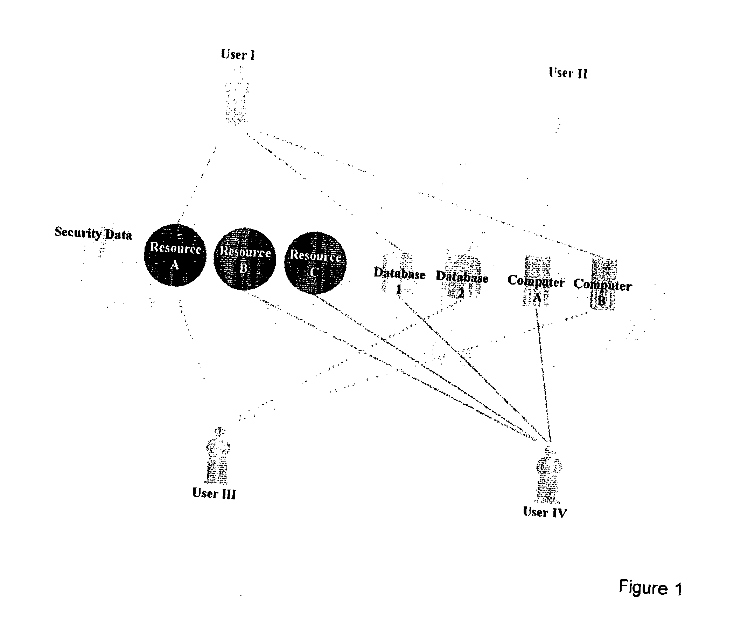

**Figure 1** shows the status of the existing security data regarding access control of users I - IV to resources A - C, databases 1 and 2 and/or computers A and B. User I for example has access to Resource A, Database 1 and Computer B. This is the minimum data required by the process according to the present invention. Normally, organizational data (e.g. organizational unit of the user), functional data (e.g. participation of the user in certain groups or task forces) and attributes of the users (e.g. allowed logon times, or location of the directory for private data) are also considered as input to the process. For simplification purposes, these kinds of data are omitted in the example.

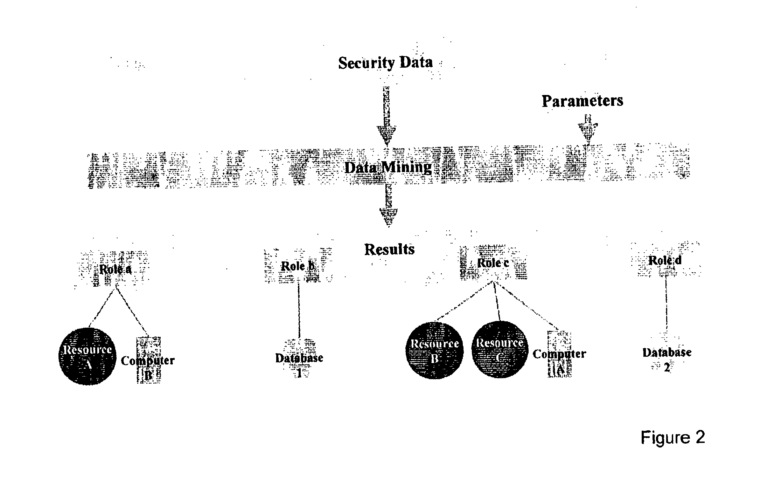

In **Figure 2** the mining is illustrated. The security data according to figure 1 is loaded into the computer. The computer examines the security data for similarities and tries to group as many of the security data as possible to a minimum number of roles. The statistical process of the data mining step requires the existing security data and in this case statistical parameters such as thresholds as input. The process results in clustering the data in the form of roles. The person skilled in the art understands that the process according to the present invention can also be carried out without the statistical parameters. In the example, a perfect match of security data and roles is achieved. Furthermore, for the sake of simplicity, the roles are completely disjunctive in this example.

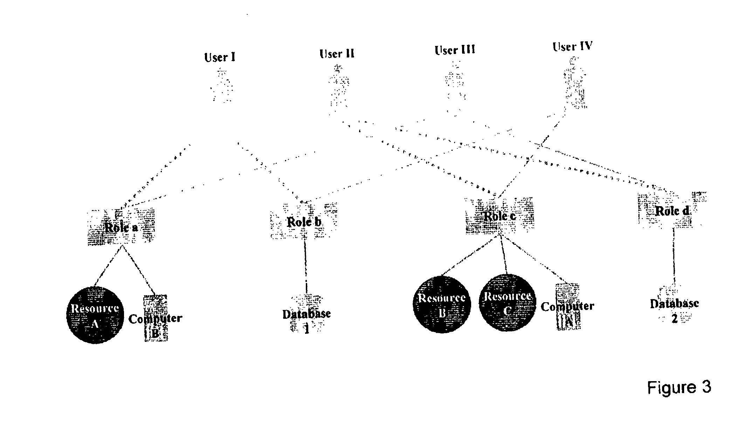

The reassignment of users to the resulting roles is illustrated in **Figure 3**. The reassignment is carried out automatically by the computer. The existing access rights are annulled. The example shows that the security data remains unchanged, meaning that every user still owns the same authorizations to IT resources as before. It is however possible that for the sake of a consistent security system the access rights of one or more users are either increased or reduced. This reduction could be for example done by assign user I not to role b.

## Claims

1. Process for the automated creation of roles for a role-based access control system of an enterprise, whereas the system organizes and manages the access of users to sensitive information in an inter- and/or intranet, by means of at least one data base comprising at least the relevant, existing security data about users and their access to sensitive information, the data base being connected to a computer, the process comprises the following steps:
a) loading the security data from the data base into the computer
b) mining the loaded data to find similarities that will allow the creation of organizational roles and/or functional roles and
c) creation of at least one role based on the outcome of step b.

2. Process according to claim 1, whereas the computer is connected to the inter- and/or intranet and automatically assigns the created role(s) according to step c to the users in the inter- and/or intranet.

3. Process according to claim 1 or 2, whereas the database is stored on a hard disk.

4. Process according to claim 1 or 2, whereas the database is stored on the RAM of a computer.

5. Process according to anyone of claims 1 - 4, whereas the mining of the loaded security data comprises clustering the loaded data to find suitable semantics for role description and/or statistics for values of all role attributes.

6. Process according to anyone of claims 1 - 4, whereas the mining of the loaded security data comprises association methods to find similarities in the loaded security data and preferably group as much as possible of the security data into as little as possible roles

7. Process according to anyone of claims 1 - 6, whereas the resulting roles are automatically checked and approved by the computer before they are assigned to the users.

8. Process according to anyone of claims 1 - 7 whereas the relevant data is at least access control data, organizational data and/or functional data of the enterprise.

9. Process according to anyone of claims 1 - 8, that in a first step the data is explored by the computer.

10. Process according to anyone of claims 1 - 9, whereas the created roles are automatically stored in the data base.

## Patentansprüche

1. Verfahren zur automatisierten Schaffung von Rollen für ein auf Rollen basierendes Zugriffssteuerungssystem eines Unternehmens, wobei das System den Zugriff von Benutzern auf schutzbedürftige Informationen in einem Interund/oder Intranet mittels mindestens einer Datenbank mit mindestens den entsprechenden bestehenden Sicherheitsdaten über Benutzer und ihren Zugriff auf schutzbedürftige Informationen organisiert und verwaltet, wobei die Datenbank mit einem Rechner verbunden ist, mit folgenden Schritten:
a) Einladen der Sicherheitsdaten aus der Datenbank in den Rechner
b) Durchsuchen der geladenen Daten, um Ähnlichkeiten festzustellen, die die Schaffung von Organisationsrollen und/oder Funktionsrollen erlauben, und
c) Schaffung von mindestens einer Rolle auf der Grundlage des Ergebnisses des Schritts b.

2. Verfahren nach Anspruch 1, wobei der Rechner mit dem Inter- und/oder Intranet verbunden ist und die geschaffene(n) Rolle(n) automatisch entsprechend dem Schritt c den Benutzern im Inter- und/oder Intranet zuweist.

3. Verfahren nach Anspruch 1 oder 2, wobei die Datenbank auf einer Festplatte gespeichert ist.

4. Verfahren nach Anspruch 1 oder 2, wobei die Datenbank im RAM eines Rechners gespeichert ist.

5. Verfahren nach einem der Ansprüche 1 - 4, wobei die Durchsuchung der geladenen Sicherheitsdaten das Anhäufen der geladenen Daten umfaßt, um eine geeignete Semantik zur Rollenbeschreibung und/oder Statistik für Werte aller Rollenmerkmale zu finden.

6. Verfahren nach einem der Ansprüche 1 - 4, wobei die Durchsuchung der geladenen Sicherheitsdaten Assoziationsverfahren zum Finden von Ähnlichkeiten in den geladenen Sicherheitsdaten und vorzugsweise Gruppieren von so vielen der Sicherheitsdaten wie möglich in so wenige Rollen wie möglich umfaßt.

7. Verfahren nach einem der Ansprüche 1 - 6, wobei die sich ergebenden Rollen automatisch vom Rechner überprüft und genehmigt werden, ehe sie den Benutzern zugewiesen werden.

8. Verfahren nach einem der Ansprüche 1 - 7, wobei die entsprechenden Daten zumindest Zugriffssteuerungsdaten, Organisationsdaten und/oder Funktionsdaten des Unternehmens sind.

9. Verfahren nach einem der Ansprüche 1 - 8, daß in einem ersten Schritt die Daten vom Rechner sondiert werden.

10. Verfahren nach einem der Ansprüche 1 - 9, wobei die geschaffenen Rollen automatisch in der Datenbank gespeichert werden.

## Revendications

1. Processus pour la création automatisée de rôles pour un système de commande d'accès basé sur rôles d'une entreprise, dans lequel le système organise et gère l'accès des utilisateurs à des informations confidentielles dans un inter- et/ou intranet, au moins d'au moins une base de données comprenant au moins les données de sécurité existantes pertinentes concernant les utilisateurs et leur accès à des informations confidentielles, la base de données étant connectée à un ordinateur, le processus comprenant les étapes suivantes :
a) chargement des données de sécurité depuis la base de données jusque dans l'ordinateur
b) exploitation statistique des données chargées afin de trouver des similarités qui permettront la création de rôles organisationnels et/ou rôles fonctionnels et
c) création d'au moins un rôle en fonction du résultat de l'étape b.

2. Processus selon la revendication 1, dans lequel l'ordinateur est connecté à l'inter- ou intranet et attribue automatiquement le(s) rôle(s) créé(s) conformément à l'étape c aux utilisateurs dans l'inter- et/ou intranet.

3. Processus selon la revendication 1 ou 2, dans lequel la base de données est mémorisée sur un disque dur.

4. Processus selon la revendication 1 ou 2, dans lequel la base de donnée est mémorisée sur la RAM d'un ordinateur.

5. Processus selon l'une quelconque des revendications 1 à 4, dans lequel l'exploitation statistique des données de sécurité chargées comprend le regroupement des données chargées afin de trouver une sémantique convenable pour la description des rôles et/ou des statistiques de valeurs de tous les attributs de rôles.

6. Processus selon l'une quelconque des revendications 1 à 4, dans lequel l'exploitation statistique des données de sécurité chargées comprend l'association de procédés pour trouver des similarités dans les données de sécurité chargées et grouper de préférence autant de données de sécurité possibles dans aussi peu de rôles possibles.

7. Processus selon l'une quelconque des revendications 1 à 6, dans lequel les rôles résultants sont automatiquement vérifiés et approuvés par l'ordinateur avant d'être attribués aux utilisateurs.

8. Processus selon l'une quelconque des revendications 1 à 7, dans lequel les données pertinentes sont au moins des données de commande d'accès, des données organisationnelles et/ou des données fonctionnelles de l'entreprise.

9. Processus selon l'une quelconque des revendications 1 à 8, **caractérisé en ce que** dans une première étape les données sont explorées par l'ordinateur.

10. Processus selon l'une quelconque des revendications 1 à 9, dans lequel les rôles créés sont automatiquement mémorisés dans la base de données.
